# EUROPÄISCHE PATENTSCHRIFT

(11) **EP 2 350 470 B1**
(45) Veröffentlichungstag und Bekanntmachung des Hinweises auf die Patenterteilung: **24.05.2017**
(21) Anmeldenummer: 09799052.7
(22) Anmeldetag: 27.11.2009
(51) Int. Cl.: F16B 5/00, F16B 5/01, F16B 13/14

(54) **VERFAHREN UND VORRICHTUNG ZUR STIRNSEITIGEN FESTLEGUNG EINES BESCHLAGS AN EINER LEICHTBAUPLATTE, LEICHTBAUPLATTE UND BESCHLAG**
METHOD AND DEVICE FOR FIXING A FITTING TO THE FRONT OF A LIGHTWEIGHT BOARD, LIGHTWEIGHT BOARD AND FITTING
PROCÉDÉ ET DISPOSITIF PERMETTANT DE FIXER UNE FERRURE SUR LA FACE FRONTALE D'UN PANNEAU LÉGER, PANNEAU LÉGER ET FERRURE

(30) Priorität: 27.11.2008 DE 102008059336; 27.11.2008 DE 202008015722 U; 27.11.2008 DE 202008015732 U; 18.05.2009 DE 102009025826
(43) Veröffentlichungstag der Anmeldung: 03.08.2011
(60) Teilanmeldung: 12171461.2
(73) Patentinhaber: Hettich-Heinze GmbH & Co. KG, 32139 Spenge (DE)
(72) Erfinder: NOLTE, Frank, 49086 Osnabrück (DE)
(74) Vertreter: Dantz, Jan Henning
(86) Internationale Anmeldenummer: PCT/EP2009/065979
(87) Internationale Veröffentlichungsnummer: WO 2010/060987

(56) Entgegenhaltungen:
- DE-U1-202008 002 540
- US-A- 4 370 372
- US-A1- 2003 152 438

## Beschreibung

Die vorliegende Erfindung betrifft ein Verfahren zur Festlegung eines Beschlags an einer Leichtbauplatte, eine Vorrichtung zur Durchführung des Verfahrens sowie eine Leichtbauplatte mit einem Beschlag.

Es ist bekannt, dass die Festlegung von Beschlägen bei Leichtbauplatten schwierig ist, da die mit Hohlräumen versehene Mittelschicht nicht zur Aufnahme von Kräften geeignet ist. Insofern ergibt sich gerade an den Stirnseiten das Problem, Beschläge auf effektive Weise mit hoher Festigkeit zu fixieren. Bisher wurden Beschläge an einer Innenseite der Deckplatten angeklebt, was eine direkte Verbindung des Beschlages mit den beiden Deckplatten ermöglicht (DE 20 2008 002 540). Allerdings ist auch hier die Festigkeit begrenzt, da die ebene Anordnung der Deckplatte Kräfte in der Ebene der Deckplatte nur begrenzt aufnehmen kann. Zudem ist das Einbringen von Klebstoff schwierig, da die Dicke der Mittelschicht toleranzbehaftet abweichen kann und somit die Qualität der Klebeverbindung stark variiert. Schließlich ist das Verkleben der Beschläge einer automatisierten Fertigung nur schlecht zugänglich.

Es ist daher Aufgabe der vorliegenden Erfindung, ein Verfahren und eine Vorrichtung zur stirnseitigen Festlegung eines Beschlags an einer Leichtbauplatte zu schaffen, die eine effektive Befestigung des Beschlages an der Leichtbauplatte ermöglicht, wobei die Befestigung eine hohe Stabilität aufweisen soll.

Diese Aufgabe wird mit einem Verfahren mit den Merkmalen des Anspruches 1, einer Vorrichtung mit den Merkmalen des Anspruches 7 sowie einer Leichtbauplatte mit den Merkmalen des Anspruches 11 gelöst.

Entsprechend dem erfindungsgemäßen Verfahren wird zunächst eine Leichtbauplatte mit zwei äußeren Deckplatten und einer Mittelschicht mit von den Deckplatten abweichenden physikalischen und / oder chemischen Eigenschaften an einer Fixiervorrichtung festgelegt. Anschließend wird mindestens eine stirnseitige Bohrung in die Leichtbauplatte eingebracht, wobei der Bohrkanal mit mindestens einem Abschnitt in mindestens eine Deckplatte eingreift. In den Bohrkanal wird anschließend ein Beschlag eingesteckt. Ferner wird ein Klebemittel in den Beschlag in eine Klebemittelkammer eingespritzt, die teilweise von der Wand des Bohrkanals im Bereich der Deckplatte begrenzt ist. Dadurch wird erreicht, dass die Klebemittelkammer im Bereich der Deckplatte eine Wölbung entsprechend dem Bohrkanal aufweist und somit Kräfte in unterschiedliche Richtungen abtragen kann. Dadurch wird die Belastbarkeit der Verbindung zwischen Beschlag und Leichtbauplatte um ein Vielfaches erhöht. Denn das ausgehärtete Klebemittel kann nun Belastungen in unterschiedliche Richtungen auf die Deckplatte übertragen. Ferner führt die Anordnung einer Bohrung mit einem Durchmesser, der geringfügig größer als die Breite der Mittelschicht ist, dazu, dass der Beschlag positionsgenau an der Stirnseite der Leichtbauplatte fixiert werden kann. Denn die Bohrung ist eine Positionierhilfe beim Einfügen des Beschlages, hierdurch wird die Positionierung und Ausrichtung des Beschlages präzise. Schließlich erleichtert diese Ausgestaltung des Bohrkanals auch den Einsatz einer automatisierten Vorrichtung. Die Rauhigkeit des geschaffenen Bohrkanals im Bereich des Eingriffs in mindestens eine Deckplatte erhöht die Festigkeit der Verbindung zwischen Klebemittel und Deckplatte. Durch die Porösität der Oberfläche des geschaffenen Bohrkanals insbesondere im Bereich des Eingriffs in mindestens eine Deckplatte kann das Klebemittel vom Material der Deckplatte noch besser aufgenommen werden.

Die Mittelschicht der Leichtbauplatten weicht in ihren chemischen und/oder physikalischen Eigenschaften von den mindesten zwei Deckplatten ab. Derzeit sind Mittelschichten bekannt die aus leichten Hölzern wie z.B. Balsa bestehen. Eine weitere Möglichkeit ist, die Mittelschicht aus Fasermaterialien wie z.B. Hanf- oder Strohfasern aufzubauen. Weiterhin können in der Mitteschicht Hohlräume wie z.B. bei Strangpress-Röhrenspanplatten oder Wabenplatten erzeugt werden. Außerdem kann die Dichte zwischen Mittelschicht und Decklagen variiert werden, um eine Leichtbauplatte zu erhalten. Denkbar ist auch, die Mittelschicht als Schaum auszuführen wie z.B. bei Schaumkernplatten. Weiterhin ist denkbar, zur Erhöhung der Stabilität zusätzlich weitere mit den physikalischen und / oder chemischen Eigenschaften der Deckplatten identische Zwischenplatten in das Verbundmaterial einzubringen. Des weiteren ist dieses Verfahren für jegliche nach dem zuvor beschriebenen Konzept aufgebaute bisher nicht bekannte Leichtbauplatten geeignet. Die Deckplatten der Leichtbauplatten sind bevorzugt darauf ausgelegt Zugbelastungen standzuhalten, die Mittelschicht hält bevorzugt Druckbelastungen stand.

Gemäß dem erfindungsgemäßen Verfahren werden beim Einbringen der Bohrung gleichzeitig beide Deckplatten an der zu der Mittelschicht gewandten Seite angebohrt. Dadurch wird dann eine schnelle Herstellung des Bohrkanals zur Aufnahme des Beschlags gewährleistet. Die Bewegung des Bohrers kann dabei senkrecht zu der Stirnseite der Möbelplatte erfolgen. Es ist aber auch möglich, den Bohrer senkrecht hierzu, also senkrecht zur Ebene der Möbelpatte zu bewegen, wobei dann eine Deckplatte durchbohrt wird, um eine Aussparung zum Einfügen eines Beschlages in die Möbelplatte einzubringen.

Vorzugsweise wird der Beschlag über einen Greifer gegriffen, wobei vor, während oder nach dem Einstecken des Beschlages in die Bohrung eine Klebemitteldüse in einen Einspritzkanal für Klebemittel an dem Beschlag eingesteckt wird. Denn der Greifer kann den Beschlag aus einem Magazin greifen und dann schon vor dem Einstecken des Beschlages in den Bohrkanal die Düse für das Klebemittel in den Klebemittelkanal einstecken, so dass eine kurze Taktzeit erreicht werden kann.

Für eine besonders feste Verbindung zwischen Beschlag und Leichtbauplatte wird als Klebmittel vorzugsweise Heißkleber mit einer Temperatur zwischen 80 °C und 180 °C, insbesondere zwischen 100 °C und 160 °C eingespritzt. Es ist jedoch auch möglich jede andere Form von Klebemittel wie z.B. 1 Komponentenkleber, 2 Komponentenkleber oder Leim zu verwenden. Auch schäumende Klebemittel können hier zur Anwendung kommen.

Um auch Beschläge mit einem von der Kreisform abweichenden Querschnitt in einen Bohrkanal einfügen zu können, sind in einer bevorzugten Ausgestaltung an einer Stirnseite der Leichtbauplatte mehrere sich teilweise überlappende Bohrungen eingebracht. Die Bohrungen können dabei einen unterschiedlichen Durchmesser aufweisen, so dass auch ein Beschlag mit länglicher Kontur an der Leichtbauplatte festgelegt werden kann.

Ferner wird gemäß der Erfindung eine Vorrichtung mit den Merkmalen des Anspruches 7 bereitgestellt, die ein Fixiervorrichtung zum Festlegen einer Leichtbauplatte, eine Bohrvorrichtung mit mindestens einem Bohrer aufweist, mittels dem eine stirnseitige Bohrung in die Leichtbauplatte einbringbar ist, wobei der Bohrkanal mit einem Randabschnitt zumindest in eine Deckplatte eingreift. Ferner umfasst die Vorrichtung einen Greifer zum Einstecken eines Beschlags in die Bohrung sowie eine Einspritzvorrichtung zum Einspritzen eines flüssigen Klebemittels in einen Klebekanal an dem Beschlag. Mit der erfindungsgemäßen Vorrichtung kann auf effektive Weise eine Leichtbauplatte mit ein oder mehreren Beschlägen bestückt werden. Dabei kann trotz kurzer Taktzeiten eine stabile Verbindung zwischen Beschlag und Leichtbauplatte hergestellt werden. Zudem kann die Positionierung des Beschlags mit der Vorrichtung positionsgenau erfolgen, da durch die Bohrung eine Zentrierung des Beschlags an der Leichtbauplatte vorgenommen wird.

Vorzugsweise weist die Bohrvorrichtung mehrere Bohrer auf, die sich teilweise überlappende Bohrungen herstellen können. Dadurch können auch Beschläge mit einem länglichen Beschlagsgehäuse an einer Stirnseite der Leichtbauplatte festgelegt werden.

In einer Ausgestaltung der Erfindung ist an dem Greifer eine Klebemitteldüse vorgesehen, die zusammen mit dem Greifer bewegbar ist. Dadurch bilden Greifer und Klebemitteldüse eine Einheit, die auf effektive Weise einen Beschlag greifen kann, wobei dann die Klebemitteldüse in einem Klebemittelkanal an dem Beschlag eingefügt werden kann. Die Klebemitteldüsen können zeitgleich zur Zentrierung und Ausrichtung des Beschlagteiles auf dem Greifer dienen.

Erfindungsgemäß wird auch eine Leichtbauplatte mit einem Beschlag mit den Merkmalen des Anspruches 11 bereitgestellt, die zwei äußere Deckplatten und eine Mittelschicht die in ihren physikalischen und / oder chemischen Eigenschaften von den Deckplatten abweicht aufweist, wobei an einer Stirnseite der Leichtbauplatte mindestens eine Bohrung eingebracht ist, in die ein Beschlag eingefügt ist. Die Bohrung umfasst einen im Querschnitt kreisförmigen Bohrkanal, der teilweise in beide Deckplatten eingreift. Der Beschlag ist dabei über ein Klebemittel festgelegt, wobei das Klebemittel in einer Klebemittelkammer angeordnet ist, deren äußere Begrenzung teilweise durch den Bohrkanal gebildet ist. Dadurch erfolgt eine Festlegung des Beschlags über eine Klebemittelkammer, die an dem gerundeten Bereich des Bohrkanals angeordnet ist, so dass Kräfte in unterschiedliche Richtungen auf die Deckplatte der Leichtbauplatte übertragen werden können. Dies erhöht die Festigkeit der Verbindung zwischen Beschlag und Leichtbauplatte erheblich.

Für eine exakte Positionierung des Beschlages liegt dieser vorzugsweise an gegenüberliegenden Seiten formschlüssig an den Deckplatten an. Diese Positionierung hat zudem den Vorteil, dass die Klebemittelkammer weitgehend abgedichtet ist, wobei an dem Beschlag entsprechende Wände ausgebildet sind, die an der Deckplatte anliegen, so dass Klebemittel nur in geringem Maße durchtreten kann. Der seitliche Spalt an der Klebekammer in einem Bereich zwischen 0,1 mm und 0,5 mm, der konstruktiv festgelegt ist, regelt einen geplanten Überlauf des überschüssigen Klebemittels.

Vorzugsweise weist der Beschlag ein topfförmiges Gehäuse auf, das stirnseitig an der Leichtbauplatte eingefügt ist. Dabei kann an dem topfförmigen Gehäuse im Bereich der Stirnseite der Leichtbauplatte ein Flansch ausgebildet sein, der als Anschlag zur Begrenzung der Einstecktiefe des Beschlages dient. Zudem kann an dem topfförmigen Gehäuse ein in die Leichtbauplatte ragender Vorsprung ausgebildet sein, der Begrenzungswände für die Klebemittelkammer ausbildet. Die Klebemittelkammer ist in Längsrichtung parallel zum Bohrkanal ausgerichtet und besitzt insofern eine leistenförmige längliche Kontur. An den Stirnseiten der Klebemittelkammer sind an dem Beschlag entsprechende Wandabschnitte zum Verschließen der Klebemittelkammer ausgebildet.

Vorzugsweise sind bei dem Beschlag zwischen den Kanälen zum Einfüllen von Klebemittel und den Aufnahmekammern durch Querschnittsverminderungen gebildete Blenden vorgesehen. Die Blende bewirkt, dass der Rücklauf von in die Aufnahmekammern eingebrachtem Klebemittel vermieden wird.

Gemäß einer weiteren Ausgestaltung sind die Aufnahmekammern an ihrem dem Gehäuse abgewandt liegenden stirnseitigen Ende durch die der Kontur der angeschnittenen Bereiche der Deckplatten angepasste Wandungen abgeschlossen.

Die Erfindung wird nachfolgend anhand mehrerer Ausführungsbeispiele mit Bezug auf die beigefügten Zeichnungen näher erläutert. Es zeigen:

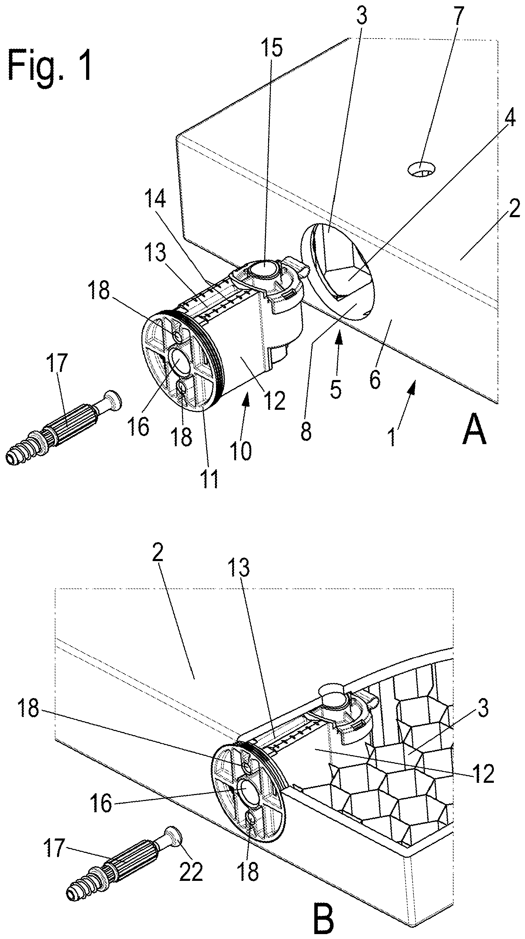

- Figuren 1A und 1B: zwei Ansichten einer erfindungsgemäßen Leichtbauplatte mit einem Beschlag bei der Montage;

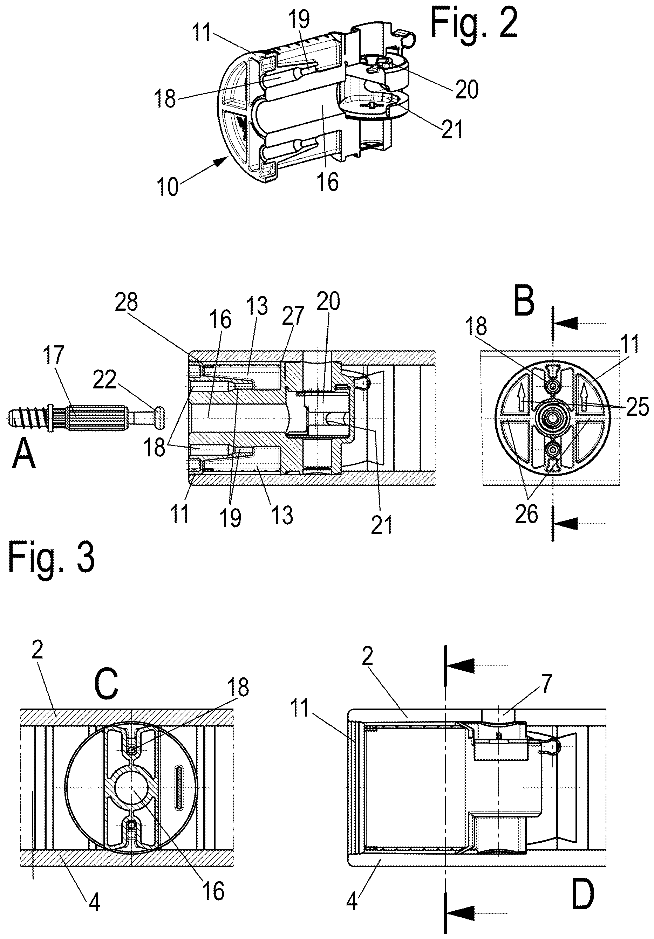

- Figur 2: eine geschnittene perspektivische Ansicht des Beschlages der Figur 1;
- Figuren 3A bis 3D: mehrere Ansichten der Leichtbauplatte mit montiertem Beschlag;
- Figuren 4A und 4B: mehrere Ansichten des Dreifach-Bohrwerkzeuges;
- Figuren 5A bis 5C: mehrere Ansichten einer Leichtbauplatte mit einem montierten Beschlag in einer zweiten Ausführungsform;
- Figuren 6A bis 6C: mehrere Ansichten des Zweistufige-Bohr-Fräswerkzeuges;
- Figuren 7A bis 7E: mehrere Ansichten einer Leichtbauplatte mit einem Beschlag gemäß einer dritten Ausführungsform;
- Figuren 8A bis 8C: mehrere Ansichten eines Greifers für einen Beschlag zur Montage an einer Leichtbauplatte; und
- Figuren 9A bis 9F: Ansicht eines Systems aus Greifern und Beschlägen.

Eine Leichtbauplatte 1 umfasst zwei äußere Deckplatten 2, 4, zwischen denen eine Mittelschicht 3 mit Hohlräumen angeordnet ist, die beispielsweise als Wabenplatte aus Pappe oder Kunststoff hergestellt ist. Die Deckplatten 2 und 4 können ebenfalls aus Pappe oder Kunststoff hergestellt sein und besitzen eine höhere Festigkeit als die Mittelschicht 3. Um einen Beschlag 10 an einer Stirnseite 6 der Leichtbauplatte 1 zu befestigen, ist eine Bohrung 5 an der Stirnseite 6 eingebracht, die einen kreisförmigen Querschnitt aufweist. Die Bohrung 5 ist dabei so ausgestaltet, dass ein Teil des Bohrkanals in die äußeren Deckplatten 2 und 4 an der Innenseite ausgebildet ist, so dass sich ein gewölbter Wandabschnitt 8 an den Deckplatten 2 und 4 ausbildet. Die Deckplatten 2 und 4 weisen meist eine Dicke zwischen 1,0 mm bis 10 mm auf, so dass der Bohrkanal in die Deckplatte zwischen 0,2 mm bis 5 mm, vorzugsweise 0,2 mm bis 1,5 mm eingreift.

Ein Beschlag 10 aus Kunststoff oder Metall umfasst einen Gehäusering 11, der im Wesentlichen passgenau in die durch die Bohrung gebildete Öffnung 5 einfügbar ist. An den Gehäusering 11 schließt sich ein Vorsprung 12 an, der in die Mittelschicht 3 einfügbar ist. An dem Vorsprung 12 sind zwei Klebemittelkammern 13 ausgebildet, die an gegenüberliegenden Längsseiten parallel zur Bohrrichtung durch Wände 14 begrenzt ist.

Endseitig an dem Vorsprung 12 ist eine Hülse 15 ausgebildet, die nach dem Einfügen des Beschlags 10 in die Bohrung 5 mit einer Öffnung 7 fluchtet, die in die Deckplatte 2 eingebracht ist. Der Beschlag weist ferner ein Rohr 16 auf, in das ein metallisches Beschlagsteil 17 einfügbar ist. Das metallische Beschlagsteil 17 umfasst einen Kopf 22, der in Eingriff mit einer Kurvenführung 21 einer Drehscheibe 20 bringbar ist, um eine klemmende Verbindung zwischen einem mit dem Beschlagsteil 17 gekoppelten Element und der Leichtbauplatte 1 herzustellen.

Damit der Beschlag 10 mit ausreichender Festigkeit in der Leichtbauplatte 1 festgelegt ist, weist dieser innerhalb des Gehäuserings 11 zwei Klebemittelkanäle 18 auf, die sich innerhalb des Beschlages 10 im Querschnitt verjüngen, so dass eine Blende 19 ausgebildet ist, bevor sich der Klebemittelkanal wieder zu der Klebemittelkammer 13 hin öffnet. Die Klebemittelkammer 13 ist nach außen durch den gewölbten Wandabschnitt 8 an den Deckplatten 2 und 4 sowie nach innen durch den Beschlag 10, insbesondere die Wände 14 begrenzt. An den Stirnseiten des länglichen Klebemittelkanals 13 sind Wandabschnitte 27 und 28 an dem Beschlag 10 ausgebildet, so dass die Klebemittelkammer 13 weitgehend abgedichtet ist und ein eingespritztes Klebemittel nur geringfügig aus der Klebemittelkammer 13 austritt. Ein geringer Austritt von Klebemittel dient der Verdrängung der Luft und dem Ausgleich von volumenwirksamen Toleranzen und somit dem sicheren Ausfüllen der Klebekammern.

An der dem Wandabschnitt 8 zugewandten Seite der Wände 14 sind Schlitze ausgebildet, durch die beim Einfüllen von Klebemittel in die Klebemittelkammer 13 zunächst Luft entweichen kann, bis das Klebemittel durch die Schlitze an den Wänden aus der Klebemittelkammer 13 herausdrückt. Dadurch kann im Bereich der Wände 14 eine besonders gute Haftung zwischen dem Beschlag 10 und den Deckplatten 2 und 4 der Leichtbauplatte 1 erreicht werden. Ferner kann überschüssiges Klebemittel durch die Schlitze entweichen, so dass die Befüllung der Klebemittelkammer 13 mit einem gewissen Überschuss erfolgen kann, damit Volumentoleranzen ausgeglichen werden können.

Auf der nach außen gerichteten Seite weist der Beschlag 10 ferner Markierungen 25 aus, um die Einbaurichtung festzulegen. Ferner sind zwei Stege 26 ausgebildet, die von einem hier nicht dargestellten Greifer gegriffen werden können, um ein Einfügen des Beschlages 10 in automatisierter Form zu erleichtern.

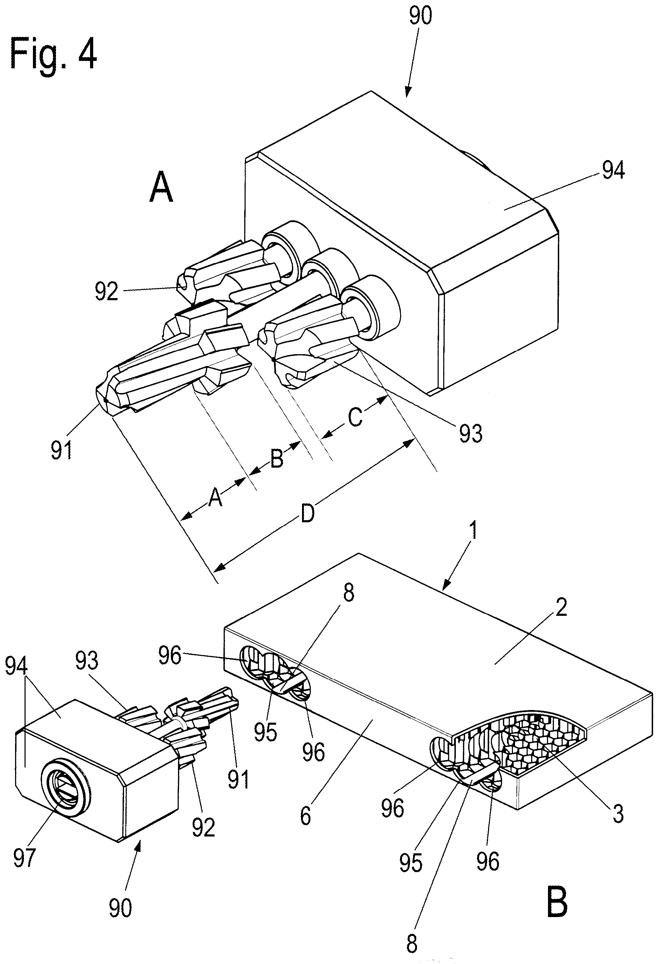

Die Figuren 4A und 4B zeigen ein Dreifach-Bohrwerkzeug 90 zur Erzeugung einer Kavität in einer Leichtbauplatte 1 zur Aufnahme des Beschlages 30 umfassend eine mittlere Kavität 95 und zwei benachbarte Kavitäten 96. Der vordere Bereich A eines Stufenbohrers 91 weist einen Durchmesser zur Erzeugung einer Kavität für die rohrförmige Verlängerung des Beschlages 30 auf. Der Bereich B des Stufenbohrers 91 verfügt über einen größeren Durchmesser zur Erzeugung der mittleren Kavität 95 für den mittleren Topf 34. Der Durchmesser ist so gewählt, dass die in mindestens eine Deckplatte 2, 4 eingreifenden Wandabschnitte 8 erzeugt werden. Die beiden äußeren Bohrer 92, 93 dienen zur Erzeugung der Kavitäten 96 für die seitlichen Töpfe 33. Der Bereich C der äußeren Bohrer 92, 93 weist den Durchmesser entsprechend den seitlichen Töpfen 33 auf. Der Bereich D kennzeichnet die Bohrtiefe des Dreifach-Bohrwerkzeuges 90. Eine Kupplung 97 an einem Getriebe 94 dient dabei zum Anschluss des Dreifach-Bohrwerkzeuges 90 an einen nicht dargestellten Antrieb.

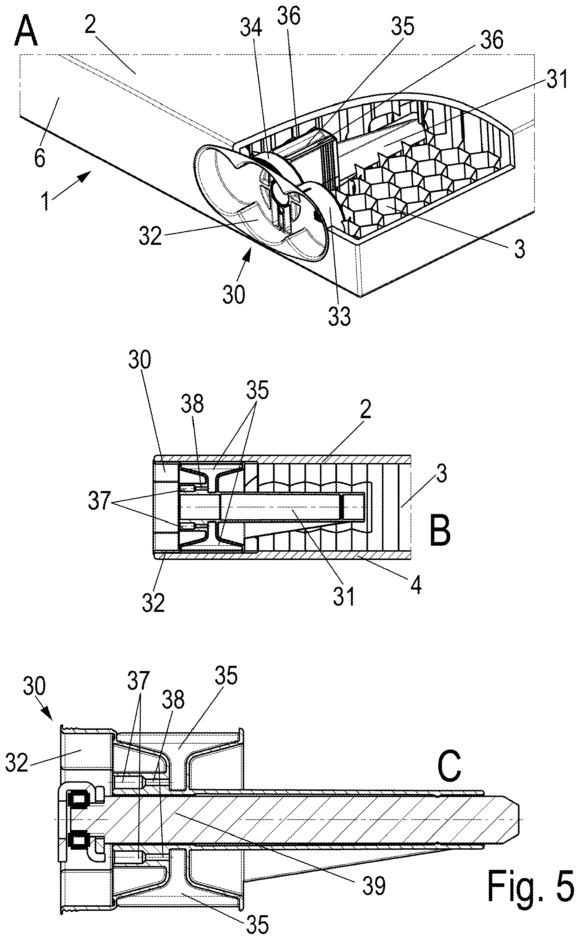

In den Figuren 5A bis 5C ist eine zweite Ausführungsform eines Beschlags 30 dargestellt, der an einer Leichtbauplatte 1 mit zwei äußeren Deckplatten 2 und 4 und einer dazwischen angeordneten Mittelschicht 3 befestigt wird. Der Beschlag 30 umfasst ein topfförmiges Gehäuse 32 mit zwei seitlichen Töpfen 33, die einen geringfügig kleineren Durchmesser aufweisen als ein mittlerer Topf 34. Die Töpfe 33 und 34 überschneiden sich und sind integral miteinander ausgebildet. An dem mittleren Topf 34 ist ähnlich wie bei dem ersten Ausführungsbeispiel ein Vorsprung ausgebildet, der an gegenüberliegenden Seiten Wandabschnitte 36 zur Ausbildung einer Klebemittelkammer 35 aufweist. Ferner ist eine rohrförmige Verlängerung 31 vorgesehen, in die ein Beschlagsteil 39 zur Festlegung eines Bauteils einfügbar ist.

Um den Beschlag 30 an einer Stirnseite 6 der Leichtbauplatte 1 zu befestigen, werden an der Stirnseite 6 drei Bohrungen hergestellt, wobei die mittlere Bohrung 95 einen etwas größeren Durchmesser hat, um den mittleren Topf 34 aufzuhemmen, während die randseitigen Bohrungen 96 die etwas kleineren seitlichen Töpfe 33 aufnehmen. Die Befestigung des Beschlages 30 erfolgt über Einspritzen von Klebemittel durch zwei Klebemittelkanäle 37, die über eine Blende 38 von der Klebemittelkammer 35 getrennt sind. Durch die Blende 38 wird verhindert, dass einmal eingespritztes Klebemittel aus der Klebemittelkammer 35 in nennenswertem Umfang in den Klebemittelkanal 37 zurückfließt, wenn eine Klebemitteldüse entfernt wurde. Denn aufgrund des kleineren Querschnittes verstopft die Blende 38 nach dem Einspritzen von Klebemittel schnell.

Im übrigen erfolgt die Befestigung des Beschlages 30 wie bei dem Beschlag 10, wobei es natürlich möglich ist, an einem Beschlag 30 mehr als nur zwei Klebemittelkammern 35 auszubilden, beispielsweise wenn die seitlichen Töpfe 33 ebenfalls einen Vorsprung aufweisen, an dem eine Klebemittelkammer 35 ausgebildet ist.

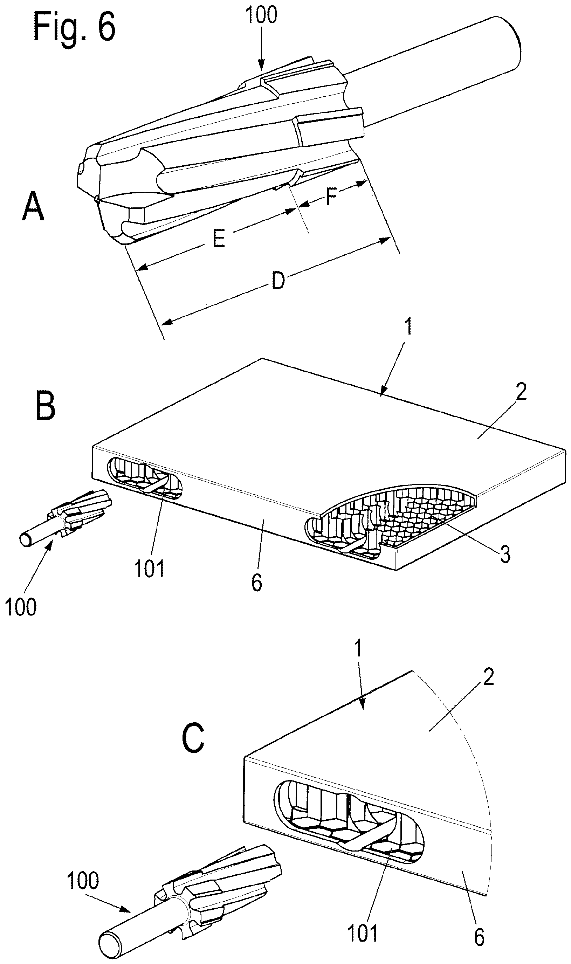

Die Figuren 6A bis 6C zeigen ein Zweistufiges-Bohr-Fräswerkzeug 100 zur Erzeugung einer Kavität 101 zur Aufnahme des Beschlages 40. Zuerst taucht das Zweistufige Bohr-Fräswerkzeug 100 mit einem vorderen Abschnitt bohrend mit den Breichen E und F um die Bohrtiefe D in die Stirnseite 6 der Leichtbauplatte 1 ein. Danach wird das Zweistufige-Bohr-Fräswerkzeug 100 bis zum Erreichen des Bereiches E aus der Stirnseite 6 der Leichtbauplatte 1 herausgefahren. Der Fräsvorgang wird nun durch Verfahren des Zweistufigen-Bohr-Fräswerkzeug 100 zur Seite hin von der Mitte ausgehend gestartet. Im nächsten Schritt verfährt das Zweistufige-Bohr-Fräswerkzeug 100 in der Ebene der Stirnseite 6 der Leichtbauplatte 1. Nach dem Abschluss des Fräsvorganges fährt das Zweistufige-Bohr-Fräswerkzeug 100 komplett aus der Leichtbauplatte 1 heraus. Die Bohrtiefe D ist so ausgelegt, dass sie zur Aufnahme des Rohrelementes 41 in die Leichtauplatte 1 genügt. Der Durchmesser des Bereiches F des Zweistufigen-Bohr-Fräswerkzeuges ist so ausgelegt, dass die in mindestens eine Deckplatte 2, 4 eingreifenden Wandbschnitte 8 erzeugt werden können. Der Durchmesser des Bereiches E des Zweistufigen-Bohr-Fräswerkzeuges 100 ist so ausgelegt, dass die Deckplatten 2,4 vorzugsweise nicht erfasst werden. Anschließend wird der Beschlag 40 in die Leichtbauplatte 1 eingesteckt, bis der Flansch 49 an der Stirnseite 6 der Leichtbauplatte 1 anschlägt.

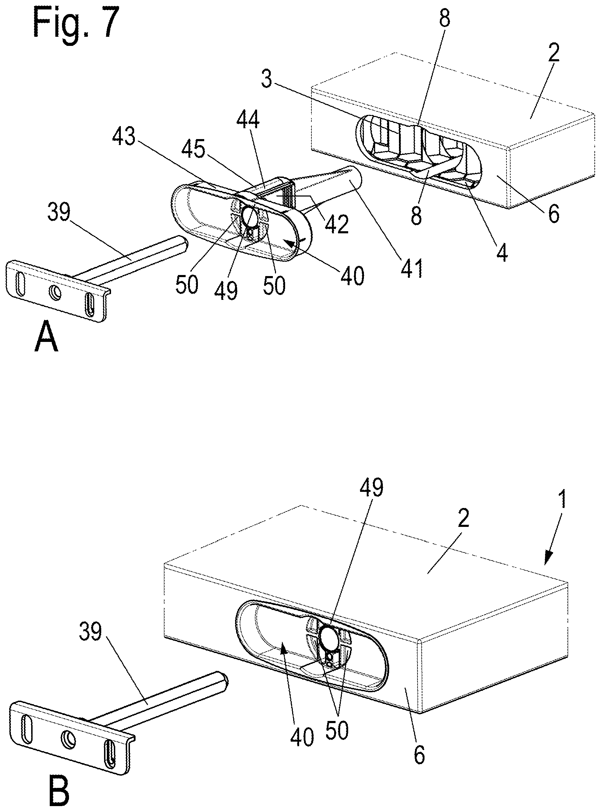

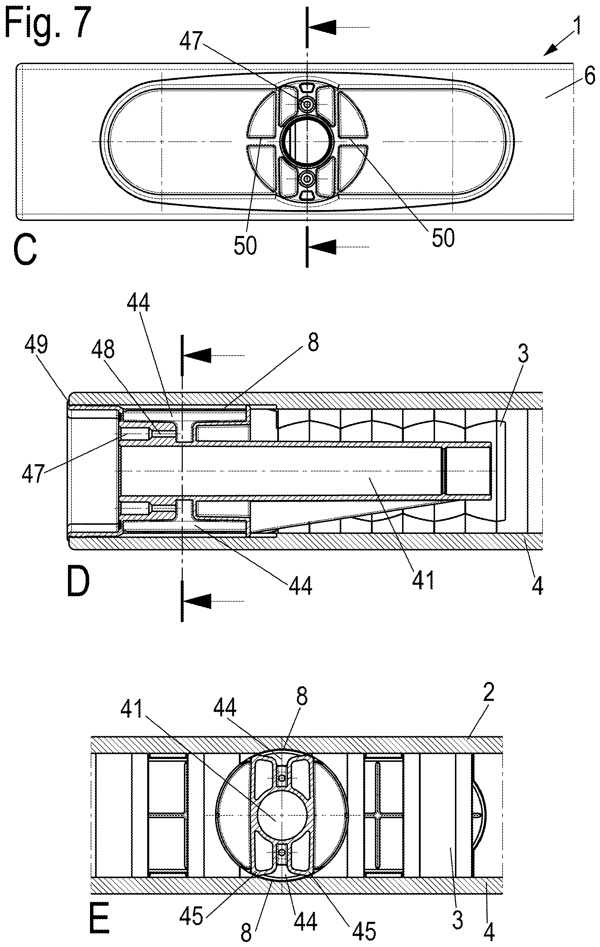

In den Figuren 7A bis 7E ist eine weitere Ausführungsform eines Beschlages 40 dargestellt, der einen länglichen Gehäusetopf 43 aufweist, von dem ein Vorsprung 42 in die Mittelschicht 3 einer Leichtbauplatte 1 hervorsteht. An dem Vorsprung 42 ist ferner ein Rohrelement 41 zur Festlegung eines Beschlagsteils 39 ausgebildet. An dem Vorsprung 42 ist wie bei den vorangegangenen Ausführungsbeispielen eine Klebemittelkammer 44 ausgebildet, die an gegenüberliegenden Seiten durch Wandabschnitte 45 begrenzt ist. An dem Gehäusetopf 43 ist an der Außenseite ein senkrecht zum Bohrkanal hervorstehender Flansch 49 ausgebildet, der einen Anschlag bei Einstecken des Beschlages 40 ausbildet.

Ferner wird Klebemittel über zwei Klebemittelkanäle 47 mit einer Blende 48 in den Beschlag 40 eingespritzt, damit das Klebemittel sich in der Klebemittelkammer 44 an gegenüberliegenden Seiten des Beschlages 40 verteilen kann und eine feste Verbindung zwischen dem Beschlag 40 und den Deckplatten 2 und 4 herstellt, wie dies schon bei den vorangegangenen Ausführungsbeispielen beschrieben wurde.

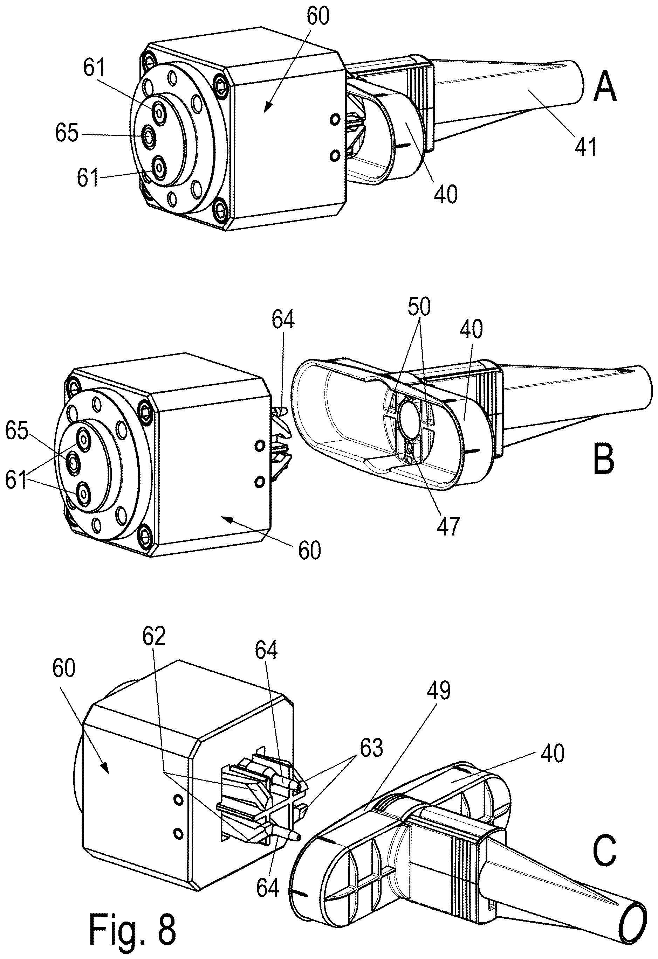

In den Figuren 8A bis 8C ist ein Greifer zur automatisierten Montage eines Beschlages 40 an einer Leichtbauplatte 1 dargestellt. Der Greifer 60 umfasst Anschlüsse 61 für eine Klebemittelzuführung und mindestens einen weiteren Anschluss 65 für mindestens eine Steuerleitung. Über die Steuerleitung und den Anschluss 65 kann Steuerluft zum Schliessen der Greiferbacken 62 und 63 zugeführt werden. Das Öffnen der Greiferbacken 62 und 63 kann beispielsweise über Federkraft erfolgen. Der Greifer 60 umfasst zwei Paare bewegbarer Greiferbacken 62 und 63, die jeweils einen im Gehäusetopf 40 angeordneten Steg 50 greifen können. Dabei ist an gegenüberliegenden Seiten des Rohres 41 jeweils ein Steg 50 angeordnet. Die Beschläge weisen Orientierungshilfen auf, damit sie über Förderer ausgerichtet zum Aufnahmeplatz für den Greifer gelangen können. Der Beschlag 40 kann dabei Markierungen oder andere Kennzeichnungsmittel aufweisen, damit der Greifer 60 eine exakte Ausrichtung vornehmen kann, um den Beschlag 40 an den Stegen 50 zu greifen. Zwischen den Paaren von Greifbacken 62 und 63 sind zwei Klebemitteldüsen 64 vorgesehen, die bei entsprechender Ausrichtung des Greifers 60 in die Klebemittelkanäle 47 an dem Beschlag 40 eingefügt werden.

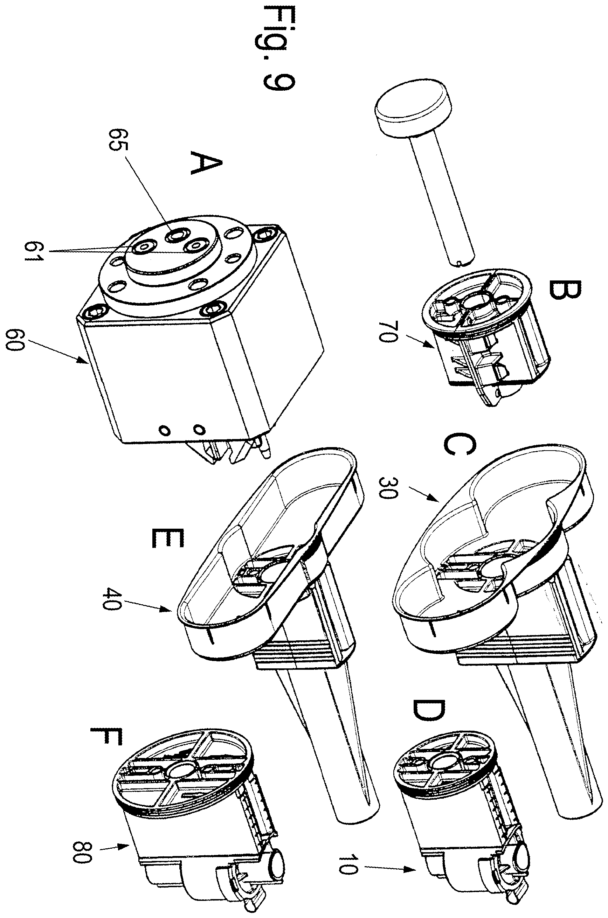

Die Figuren 9A bis 9F zeigen, dass verschiedene Beschläge 10, 30, 40, 70, 80 mit dem Greifer 60 verarbeitet werden können. Der Greifer 60 kann jeden dieser Beschläge oder auch jeden weiteren entsprechend diesem Systemgedanken konstruierten Beschlag verarbeiten. Somit ist für die Möbelfertigung kein Werkzeugwechsel zur Verarbeitung von Beschlägen aus diesem System erforderlich.

Die Montage der Beschläge 10, 30 oder 40 erfolgt insbesondere in einem automatisierten Verfahren mittels eines Greifers 60. Zunächst wird an einer Leichtbauplatte eine Bohrung eingebracht, wobei der Durchmesser der Bohrung so groß ist, dass die Bohrung die Deckplatten 2 und 4 teilweise anbohrt, so dass sich ein gerundeter Wandabschnitt 8 an den Deckplatten 2 und 4 ausbildet. Anschließend wird eine Stirnseite 6 der Leichtbauplatte wahlweise so belassen oder nachbearbeitet, wahlweise über Fräsen oder Bohren, bis die Öffnung an der Stirnseite 6 der Kontur eines Gehäuserings 11 oder eines Gehäusetopfes 33, 34 oder 43 entspricht. Anschließend wird ein Beschlag 10, 30 oder 40 aus einem Magazin über einen Greifer 60 gegriffen und dabei im Wesentlichen gleichzeitig die Klebemitteldüse 64 in einen Klebemittelkanal eingefügt. Anschließend wird der Beschlag 10, 30 oder 40 in die Leichtbauplatte eingefügt, wobei die Wandabschnitte 14, 36 und 45 im Wesentlichen formschlüssig an der Deckplatte 2 oder 4 anliegen und somit eine Begrenzung für eine Klebemittelkammer 15, 35 oder 44 ausbilden.

Anschließend wird ein Klebemittel, vorzugsweise Heißkleber, bei einer Temperatur zwischen 80 ° C und 180 ° C in die Klebemittelkammer 15, 35 oder 44 eingespritzt. Das Klebemittel kann dann aushärten und die Klebemitteldüse 64 an dem Greifer 64 wird aus den Klebemittelkanälen abgezogen. Aufgrund der Anordnung einer Blende 19, 38 oder 48 an jedem Klebemittelkanal 18, 37 und 47 wird ein Zurückfließen des Klebemittels in nennenswertem Umfang vermieden. Nach Aushärten des Klebemittels ist eine stabile Verbindung zwischen dem Beschlag 10, 30 oder 40 und der Leichtbauplatte 1 hergestellt, wobei das Klebemittel an der gerundeten Kontur der Wand 8 anliegt, so dass Kräfte in unterschiedliche Richtungen zwischen dem Beschlag 10, 30 oder 40 auf die Deckplatten 2 und 4 übertragen werden können. Der Einsatz dieses Verfahrens ist nicht auf die Verwendung von Heißkleber beschränkt, es können auch andere Klebemittel zum Einsatz kommen.

Ein Verbindungsbeschlag dient zur stirnseitigen Befestigung zweier benachbarter Möbelplatten 1, die insbesondere in Leichtbauweise ausgeführt sind und zwei äußere Deckplatten 2 und 3 umfassen, zwischen denen eine Mittelschicht 4 angeordnet ist. Die Mittelschicht 4 besteht aus einem anderen Material als die Deckplatten 2 und 3, insbesondere aus einer Wabenplatte, einem Schaumkern, leichten Hölzern, Faserwerkstoffen oder anderen Materialien mit geringem Eigengewicht. Die Deckplatten 2 und 3 bestehen vorzugsweise aus Holzwerkstoffen oder Pappe, wobei auch andere Materialien eingesetzt werden können. Die in Leichtbauweise ausgeführten Möbelplatten 1 weisen eine umlaufende Stütz- und Dekorkante 5 auf, die einerseits der Stabilisierung und dem Verschließen der Stirnfläche der Möbelplatte 1 dient, andererseits auch eine design-ästhetische Funktion übernehmen kann.

**Bezugszeichenliste**

| | | | |
|---|---|---|---|
| | | 40 | Beschlag |
| 1 | Leichtbauplatte | 41 | Rohrelement |
| 2 | Deckplatte | 42 | Vorsprung |
| 3 | Mittelschicht | 43 | Länglicher Gehäusetopf |
| 4 | Deckplatte | 44 | Klebemittelkammer |
| 5 | Bohrung | 45 | Wandabschnitt |
| 6 | Strinseite | 47 | Klebemittelkanal |
| 7 | Öffnung | 48 | Blende |
| 8 | Gewölbter Wandabschnitt | 49 | Hervorstehender Flansch |
| 10 | Beschlag | 50 | Steg |
| 11 | Gehäusering | 60 | Greifer |
| 12 | Vorsprung | 61 | Anschlüsse |
| 13 | Klebemittelkammer | 62 | Greiferbacke |
| 14 | Seitenwand | 63 | Greiferbacke |
| 15 | Hülse | 64 | Klebemitteldüse |
| 16 | Rohr | 70 | Beschlag |
| 17 | Beschlagteil | 80 | Beschlag |
| 18 | Klebemittelkanal | 90 | Dreifach-Bohrwerkzeug |
| 19 | Blende | 91 | Stufenbohrer |
| 20 | Drehscheibe | 92 | Äußerer Bohrer |
| 21 | Kurvenführung | 93 | Äußerer Bohrer |
| 22 | Kopf | 94 | Getriebe |
| 25 | Markierung | 95 | Mittlere Kavität |
| 26 | Stege | 96 | Äußere Kavität |
| 27 | Wandabschnitt | 97 | Kupplung |
| 28 | Wandabschnitt | 100 | Zweistufiges-Bohr-Fräswerkzeug |
| 30 | Beschlag | 101 | Kavität |
| 31 | Rohrförmige Verlängerung | | |
| 32 | Toppförmiges Gehäuse | A | Bereich |
| 33 | Seitlicher Topf | B | Bereich |
| 34 | Mittlerer Topf | C | Bereich |
| 35 | Klebemittelkammer | D | Bohrtiefe |
| 36 | Wandabschnitt | E | Bereich |
| 37 | Klebemittelkanal | F | Bereich |
| 38 | Blende | | |

## Patentansprüche

1. Verfahren zur stirnseitigen Festlegung eines Beschlags (10, 30, 40, 70, 80) an einer Leichtbauplatte (1), mit den folgenden Schritten:
- Festlegen einer Leichtbauplatte (1) mit zwei äußeren Deckplatten (2, 4) und einer mit Hohlräumen und einer Mittelschicht (3) mit von den Deckplatten (2, 4) abweichenden physikalischen und / oder chemischen Eigenschaften an einer Fixiervorrichtung;
- Einbringen mindestens einer stirnseitigen Bohrung (5) in die Leichtbauplatte (1), wobei der Bohrkanal mit einem Abschnitt in mindestens eine Deckplatte (2, 4) eingreift und beim Einbringen der Bohrung gleichzeitig beide Deckplatten (2, 4) an der zu der Mittelschicht (3) gewandten Seite angebohrt werden;
- Einstecken eines Beschlags (10, 30, 40, 70, 80) in die Bohrung, und
- Einspritzen eines Klebemittels in den Beschlag (10, 30, 40, 70, 80) in eine Klebemittelkammer (13, 35, 44), die teilweise von der Wand (8) des Bohrkanals im Bereich der mindestens einen Deckplatte (2, 4) begrenzt ist.
1.

2. Verfahren nach Anspruch 1, **dadurch gekennzeichnet, dass** der Beschlag (10, 30, 40, 70, 80) über einen Greifer (60) gegriffen wird, und vor dem Einstecken des Beschlags (10, 30, 40, 70, 80) in die Bohrung eine Klebemitteldüse (64) in einen Einspritzkanal (18, 37, 47) für Klebemittel an dem Beschlag (10, 30, 40) eingesteckt wird.

3. Verfahren nach Anspruch 1, **dadurch gekennzeichnet, dass** der Beschlag (10, 30, 40, 70, 80) über einen Greifer (60) gegriffen wird, und bei dem Einstecken des Beschlags (10, 30, 40, 70, 80) in die Bohrung eine Klebemitteldüse (64) in einen Einspritzkanal (18, 37, 47) für Klebemittel an dem Beschlag (10, 30, 40, 70, 80) eingesteckt wird.

4. Verfahren nach einem der Ansprüche 1 bis 3, **dadurch gekennzeichnet, dass** als Klebemittel Heißkleber mit einer Temperatur zwischen 80 °C und 180 °C, vorzugsweise zwischen 100 °C und 160 °C, eingespritzt wird.

5. Verfahren nach einem der Ansprüche 1 bis 4, **dadurch gekennzeichnet, dass** an einer Stirnseite (6) mehrere sich teilweise überlappende Bohrungen eingebracht werden, die vorzugsweise einen unterschiedlichen Durchmesser aufweisen.

6. Verfahren nach einem der Ansprüche 1 bis 5, **dadurch gekennzeichnet, dass** mindestens ein Bohrer senkrecht zur Ebene der Möbelplatte (1) bewegt wird und an einer Stirnseite (6) der Möbelplatte (1) eine Aussparung in einer Deckplatte (2) herstellt.

7. Vorrichtung zur Durchführung des Verfahrens nach einem der vorherigen Ansprüche, umfassend:
- eine Fixiervorrichtung zum Festlegen einer Leichtbauplatte (1) mit zwei äußeren Deckplatten (2, 4) und einer Mittelschicht (3);
- eine Bohrvorrichtung mit mindestens einem Bohrer, mittels dem eine stirnseitige Bohrung in die Leichtbauplatte (1) einbringbar ist, wobei der Bohrkanal mit einem Randabschnitt in beide Deckplatten (2, 4) eingreift da durch die Bohrung gleichzeitig beide Deckplatten (2, 4) an der zu der Mittelschicht (3) gewandten Seite angebohrt sind;
- einen Greifer (60) zum Einstecken eines Beschlags (10, 30, 40, 70, 80) in die Bohrung, und
- eine Einspritzvorrichtung zum Einspritzen eines flüssigen Klebemittels in einen Klebekanal (18, 37, 47) in dem Beschlag (10, 30, 40, 70, 80).

8. Vorrichtung nach Anspruch 7, **dadurch gekennzeichnet, dass** die Bohrvorrichtung mehrere gestuft angeordnete Bohrer (91, 92, 93) aufweist, die sich teilweise überlappende Bohrungen herstellen können.

9. Vorrichtung nach Anspruch 7, **dadurch gekennzeichnet, dass** die Bohrvorrichtung einen Bohrer aufweist, der einen Fräsaufsatz zum Herstellen einer länglichen Öffnung durch Bohren und anschließendes Fräsen.

10. Vorrichtung nach einem der Ansprüche 7 bis 9, **dadurch gekennzeichnet, dass** an dem Greifer (60) eine Klebemitteldüse (64) vorgesehen ist, die zusammen mit dem Greifer (60) bewegbar ist.

11. Leichtbauplatte (1) mit einem Beschlag (10, 30, 40, 70, 80), wobei die Leichtbauplatte (1) zwei äußere Deckplatten (2, 4) und eine Mittelschicht (3) aufweist und an einer Stirnseite (6) der Leichtbauplatte (1) mindestens eine Bohrung eingebracht ist, **dadurch gekennzeichnet, dass** ein kreisförmiger Bohrkanal teilweise in beide Deckplatten (2, 4) eingreift, da beim Einbringen der Bohrung gleichzeitig beide Deckplatten (2, 4) an der zu der Mittelschicht (3) gewandten Seite angebohrt sind, und in den Bohrkanal ein Beschlag (10, 30, 40, 70, 80) eingefügt ist, der über ein Klebemittel festgelegt ist und das Klebemittel in einer Klebemittelkammer (13, 35, 44) angeordnet ist, deren äußere Begrenzung teilweise durch einen Wandabschnitt (8) des Bohrkanals gebildet ist.

12. Leichtbauplatte nach Anspruch 11, **dadurch gekennzeichnet, dass** der Beschlag (10, 30, 40) an gegenüberliegenden Seiten formschlüssig an den Deckplatten (2, 4) anliegt.

13. Leichbauplatte nach Anspruch 11 oder 12, **dadurch gekennzeichnet, dass** der Beschlag (10, 30, 40, 70, 80) ein topfförmiges Gehäuse aufweist, das stirnseitig an der Leichtbauplatte (1) eingefügt ist und sich an das topfförmige Gehäuse ein Vorsprung (12, 42) anschließt, der Begrenzungswände für die Klebemittelkammern (13, 35, 44) ausbildet.

14. Leichtbauplatte nach einem der Ansprüche 11 bis 13, **dadurch gekennzeichnet, dass** der Beschlag (30, 40) an der nach außen gewandten Seite einen senkrecht zum Bohrkanal ausgerichteten Flansch (49) aufweist, der einen Anschlag zur Begrenzung der Einstecktiefe des Beschlags (30, 40) ausbildet.

15. Leichtbauplatte nach einem der Ansprüche 11 bis 14, **dadurch gekennzeichnet, dass** der Beschlag (10, 30, 40, 70, 80) benachbart zu der Stirnseite (6) jeweils einen in die Deckplatte (2, 4) eingreifenden Vorsprung aufweist, der in den Bohrkanal eingefügt ist und eine stirnseitige Wand der Klebemittelkammer (13, 35, 44) ausbildet.

## Claims

1. A method for fixing a fitting (10, 30, 40, 70, 80) to a lightweight board (1) on the face end, comprising the following steps:
- fixing a lightweight board (1) with two outer cover boards (2, 4) and a middle layer (3) having cavities and physical and/or chemical properties deviating from the cover boards (2, 4) to a fixing apparatus;
- introducing at least one front bore (5) into the lightweight board (1), wherein the bore channel engages with a section in at least one cover board (2, 4) and during the introduction of the bore both cover boards (2, 4) are bored simultaneously on the side facing the middle layer (3);
- inserting a fitting (10, 30, 40, 70, 80) into the bore, and
- injecting an adhesive into the fitting (10, 30, 40, 70, 80) in an adhesive chamber (13, 35, 44), which is bounded at least partly by the wall (8) of the bore channel in the region of the at least one cover plate (2, 4).

2. A method according to claim 1, **characterized in that** the fitting (10, 30, 40, 70, 80) is gripped by a gripper (60), and prior to the insertion of the fitting (10, 30, 40, 70, 80) into the bore an adhesive nozzle (64) is inserted into an injection channel (18, 37, 47) for adhesive on the fitting (10, 30, 40).

3. A method according to claim 1, **characterized in that** the fitting (10, 30, 40, 70, 80) is gripped by a gripper (60), and during the insertion of the fitting (10, 30, 40, 70, 80) into the bore an adhesive nozzle (64) is inserted into an injection channel (18, 37, 47) for adhesive on the fitting (10, 30, 40, 70, 80).

4. A method according to one of the claims 1 to 3, **characterized in that** hot adhesive with a temperature of between 80°C and 180°C, preferably between 100°C and 160°C, is injected as an adhesive.

5. A method according to one of the claims 1 to 4, **characterized in that** several mutually partly overlapping bores are introduced on one front face (6), which preferably have a different diameter.

6. A method according to one of the claims 1 to 5, **characterized in that** at least one drill is moved perpendicularly to the plane of the furniture board (1) and produces a recess in a cover board (2) on a front face (6) of the furniture board (1).

7. An apparatus for carrying out the method according to one of the preceding claims, comprising:
- a fixing apparatus for fixing a lightweight board (1) with two outer cover boards (2, 4) and a middle layer (3);
- a drilling apparatus with at least one drill, by means of which a front bore can be introduced into the lightweight board (1), wherein the bore channel engages with a boundary section in both cover boards (2, 4) because both cover boards (2, 4) are simultaneously bored by the bore on the side facing the middle layer (3);
- a gripper (60) for inserting a fitting (10, 30, 40, 70, 80) into the bore, and
- an injection apparatus for injecting a liquid adhesive into a bore channel (18, 37, 47) in the fitting (10, 30, 40, 70, 80).

8. An apparatus according to claim 7, **characterized in that** the drilling apparatus comprises several drills (91, 92, 93) which are arranged in steps and which can produce partly overlapping bores.

9. An apparatus according to claim 7, **characterized in that** the drilling apparatus comprises a drill having a milling adapter for producing an elongated opening by drilling and subsequent milling.

10. An apparatus according to one of the claims 7 to 9, **characterized in that** an adhesive nozzle (64) is provided on the gripper (60), which nozzle can be moved together with the gripper (60).

11. A lightweight board (1) with a fitting (10, 30, 40, 70, 80), wherein the lightweight board (1) comprises two outer cover boards (2, 4) and a middle layer (3), and at least one bore is introduced in a front face (6) of the lightweight board (1), **characterized in that** a circular bore channel engages partly in both cover boards (2, 4) because during the introduction of the bore both cover boards (2, 4) are bored simultaneously on the side facing the middle layer (3), and a fitting (10, 30, 40, 70, 80) is inserted into the bore channel, which fitting is fixed via an adhesive and the adhesive is arranged in an adhesive chamber (13, 35, 44) whose outer boundary is formed partly by a wall section (8) of the bore channel.

12. A lightweight board according to claim 11, **characterized in that** the fitting (10, 30, 40) rests on opposite sides in an interlocking manner on the cover boards (2, 4).

13. A lightweight board according to claim 11 or 12, **characterized in that** the fitting (10, 30, 40, 70, 80) comprises a cup-shaped housing which is inserted on the front face on the lightweight board (1) and a projection (12, 42) adjoins the cup-shaped housing, which projection forms boundary walls for the adhesive chambers (13, 35, 44).

14. A lightweight board according to one of the claims 11 to 13, **characterized in that** the fitting (30, 40), on the side facing to the outside, comprises a flange (49) which is oriented perpendicularly to the bore channel and which forms a stop for limiting the insertion depth of the fitting (30, 40).

15. A lightweight board according to one of the claims 11 to 14, **characterized in that** adjacent to the front face (6) the fitting (10, 30, 40, 70, 80) comprises a respective projection engaging in the cover board (2, 4), which projection is inserted into the bore channel and forms a front wall of the adhesive chamber (13, 35, 44).

## Revendications

1. Procédé pour la fixation sur face frontale d'une ferrure (10, 30, 40, 70, 80) sur un panneau de construction léger (1), comprenant les étapes suivantes :
- fixation d'un panneau de construction léger (1) avec deux plaques de couverture extérieures (2, 4) et une couche intermédiaire (3) comportant des cavités et ayant des propriétés physiques et/ou chimiques différentes des plaques de couvertures (2, 4) sur un dispositif de fixation ;
- placement d'au moins un trou percé (5) en face frontale dans le panneau de construction léger (1), le canal percé se mettant en partie en prise dans au moins une plaque de couverture (2, 4) et les deux plaques de couverture (2, 4) étant percées en même temps lors du perçage du trou sur la face tournée vers la couche intermédiaire (3) ;
- insertion d'une ferrure (10, 30, 40, 70, 80) dans le trou percé, et
- injection d'un adhésif dans la ferrure (10, 30, 40, 70, 80) dans une chambre à adhésif (13, 35, 44) partiellement délimitée par la paroi (8) du canal percé au niveau d'au moins une plaque de couverture (2, 4).

2. Procédé selon la revendication 1, **caractérisé en ce que** la ferrure (10, 30, 40, 70, 80) est saisie par un organe de préhension (60) et, avant l'insertion de la ferrure (10, 30, 40, 70, 80) dans le trou percé, une buse à adhésif (64) est insérée dans un canal d'injection (18, 37, 47) pour l'adhésif sur la ferrure (10, 30, 40).

3. Procédé selon la revendication 1, **caractérisé en ce que** la ferrure (10, 30, 40, 70, 80) est saisie par un organe de préhension (60) et, lors de l'insertion de la ferrure (10, 30, 40, 70, 80) dans le trou percé, une buse à adhésif (64) est insérée dans un canal d'injection (18, 37, 47) pour l'adhésif sur la ferrure (10, 30, 40, 70, 80).

4. Procédé selon l'une des revendications 1 à 3, **caractérisé en ce que** l'adhésif est un adhésif à chaud injecté à une température comprise entre 80 °C et 180 °C, de préférence entre 100 °C et 160 °C.

5. Procédé selon l'une des revendications 1 à 4, **caractérisé en ce que** plusieurs trous se recoupant partiellement et ayant de préférence un diamètre différent sont percés sur une face frontale (6).

6. Procédé selon l'une des revendications 1 à 5, **caractérisé en ce qu'**au moins une perceuse est déplacée perpendiculairement au plan du panneau de meuble (1) et crée sur une face frontale (6) du panneau de meuble (1) une découpe dans une plaque de couverture (2).

7. Dispositif pour la mise en oeuvre du procédé selon l'une des revendications précédentes, comprenant :
- un dispositif de fixation pour fixer un panneau de construction léger (1) avec deux plaques de couverture extérieures (2, 4) et une couche intermédiaire (3) ;
- un dispositif de perçage avec au moins une perceuse au moyen de laquelle un trou peut être percé sur la face frontale dans le panneau de construction léger (1), le canal percé se mettant en prise par une partie de bord dans les deux plaques de couverture (2, 4) car les deux plaques de couverture (2, 4) sont percées simultanément du trou percé sur leur face tournée vers la couche intermédiaire (3) ;
- un organe de préhension (60) pour insérer une ferrure (10, 30, 40, 70, 80) dans le trou percé, et
- un dispositif d'injection pour injecter un adhésif liquide dans un canal de collage (18, 37, 47) dans la ferrure (10, 30, 40, 70, 80).

8. Dispositif selon la revendication 7, **caractérisé en ce que** le dispositif de perçage présente plusieurs perceuses (91, 92, 93) étagées qui peuvent créer des trous percés se recoupant partiellement.

9. Dispositif selon la revendication 7, **caractérisé en ce que** le dispositif de perçage présente une perceuse qui présente un outil de fraisage pour réaliser une ouverture allogène par perçage puis fraisage.

10. Dispositif selon l'une des revendications 7 à 9, **caractérisé en ce qu'**il est prévu sur l'organe de préhension (60) une buse à adhésif (64) qui peut être déplacée en même temps que l'organe de préhension (60).

11. Panneau de construction léger (1) avec une ferrure (10, 30, 40, 70, 80), le panneau construction léger (1) présentant deux plaques de couverture extérieures (2, 4) et une couche intermédiaire (3) et au moins un trou étant percé sur une face frontale (6) du panneau de construction léger (1), **caractérisé en ce qu'**un canal percé circulaire se met partiellement en prise dans les deux plaques de couverture (2, 4) car les deux plaques de couverture (2, 4) sont percées simultanément sur leur face tournée vers la couche intermédiaire (3) lors du perçage du trou percé et une ferrure (10, 30, 40, 70, 80) fixée par un adhésif est insérée dans le canal percé, et l'adhésif est disposé dans une chambre à adhésif (13, 35, 44) dont la délimitation extérieure est partiellement formée par une partie de paroi (8) du canal percé.

12. Panneau de construction léger selon la revendication 11, **caractérisé en ce que** la ferrure (10, 30, 40) repose sur des faces opposées en correspondance de forme sur les plaques de couverture (2, 4).

13. Panneau de construction léger selon la revendication 11 ou 12, **caractérisé en ce que** la ferrure (10, 30, 40, 70, 80) présente un boîtier en forme de pot qui est inséré sur la face frontale sur le panneau de construction léger (1) et le boîtier en forme de pot est raccordé à une saillie (12, 42) qui forme les parois de délimitation des chambres à adhésif (13, 35,44).

14. Panneau de construction léger selon l'une des revendications 11 à 13, **caractérisé en ce que** la ferrure (30, 40) présente du côté tourné vers l'extérieur une bride (49) orientée perpendiculairement au canal percé, qui forme une butée pour limiter la profondeur d'insertion de la ferrure (30, 40).

15. Panneau de construction léger selon l'une des revendications 11 à 14, **caractérisé en ce que** la ferrure (10, 30, 40, 70, 80) présente au voisinage de chaque face frontale (6) une saillie qui se met en prise dans la plaque de couverture (2, 4), qui est insérée dans le canal percé et qui forme une paroi sur la face d'extrémité pour les chambres à adhésif (13, 35,44).
